# FASCICULE DE BREVET EUROPEEN

(11) **EP 4 124 505 B1**
(45) Date de publication et mention de la délivrance du brevet: **29.05.2024**
(21) Numéro de dépôt: 22186762.5
(22) Date de dépôt: 25.07.2022
(51) Int. Cl.: B60N 2/865, B60N 2/809

(54) **APPUI-TÊTE DE SIÈGE DE VÉHICULE AUTOMOBILE**
KOPFSTÜTZE FÜR KRAFTFAHRZEUGSITZ
HEADREST FOR A MOTOR VEHICLE SEAT

(30) Priorité: 26.07.2021 FR 2108094
(43) Date de publication de la demande: 01.02.2023
(73) Titulaire: TESCA France, 92977 Paris La Défense Cedex (FR)
(72) Inventeur: GEORGES, Laurent, 92977 Paris La Défense Cedex (FR)
(74) Mandataire: Sayettat, Julien Christian

(56) Documents cités:
- FR-A1- 3 036 666
- US-A1- 2014 145 489

## Description

L'invention concerne un appui-tête de siège de véhicule automobile.

Il est connu de réaliser un appui-tête de siège de véhicule automobile, ledit appui-tête comprenant :
- une armature de montage sur un dossier dudit siège, ladite armature comprenant deux tiges parallèles s'étendant verticalement,
- un corps principal en matériau plastique moulé monté en coulissement sur lesdites tiges de manière à pouvoir adopter une pluralité de positions de réglage vertical,
- un premier dispositif de verrouillage dudit corps principal dans la position de réglage choisie,
- un corps secondaire en matériau plastique moulé monté en coulissement longitudinal sur ledit corps principal, de sorte que ledit corps secondaire puisse adopter une pluralité de positions de réglage longitudinal,
- un deuxième dispositif de verrouillage dudit corps secondaire dans la position de réglage choisie quand un choc est appliqué vers l'arrière sur ledit corps,
- une traverse commune de déverrouillage desdits dispositifs, ladite traverse étant montée en coulissement transversal sur ledit corps principal, ladite traverse présentant une extrémité pourvue d'un bouton permettant son actionnement en déverrouillage, de manière à libérer le coulissement desdits corps principal et secondaire,
- un premier moyen ressort de renvoi de ladite traverse en position de verrouillage.

Les agencements connus présentent généralement un coût important, lié notamment à l'utilisation de matériaux plastiques de hautes performances mécaniques pour réaliser les corps principal et secondaire. Le document FR 3 036 666 A1 divulgue un appui-tête de ce type.

L'utilisation de tels matériaux est en effet requise pour assurer un verrouillage robuste du corps secondaire dans sa position de réglage en cas de choc violent d'une tête de passager sur l'appui-tête, ceci afin d'en assurer la sécurité dudit passager.

L'invention a pour but de proposer un agencement apportant une grande robustesse de verrouillage du corps secondaire, et ceci même en cas d'utilisation de matériaux plastique de performances mécaniques médiocres comme le polyéthylène de haute densité (PEHD).

A cet effet, l'invention propose un appui-tête de siège de véhicule automobile, ledit appui-tête comprenant :
- une armature de montage sur un dossier dudit siège, ladite armature comprenant deux tiges parallèles s'étendant verticalement,
- un corps principal en matériau plastique moulé monté en coulissement sur lesdites tiges de manière à pouvoir adopter une pluralité de positions de réglage vertical,
- un premier dispositif de verrouillage dudit corps principal dans la position de réglage choisie,
- un corps secondaire en matériau plastique moulé monté en coulissement longitudinal sur ledit corps principal, de sorte que ledit corps secondaire puisse adopter une pluralité de positions de réglage longitudinal,
- un deuxième dispositif de verrouillage dudit corps secondaire dans la position de réglage choisie quand un choc est appliqué vers l'arrière sur ledit corps,
- une traverse commune de déverrouillage desdits dispositifs, ladite traverse étant montée en coulissement transversal sur ledit corps principal, ladite traverse présentant une extrémité pourvue d'un bouton permettant son actionnement en déverrouillage, de manière à libérer le coulissement desdits corps principal et secondaire,
- un premier moyen ressort de renvoi de ladite traverse en position de verrouillage,
ledit appui-tête présentant en outre les caractéristiques suivantes :
- ladite traverse est pourvue d'une crémaillère d'actionnement,
- ledit deuxième dispositif de verrouillage comprend un premier loquet supérieur et un deuxième loquet inférieur montés chacun en coulissement vertical sur ledit corps principal, lesdits loquets étant actionnés en écartement l'un de l'autre par un deuxième moyen ressort interposé entre eux pour les disposer en position de verrouillage où lesdits loquets coopèrent respectivement avec une première et une deuxième crémaillère de verrouillage s'étendant longitudinalement sur ledit corps secondaire, lesdits loquets étant actionnables vers une position rapprochée de déverrouillage où ils s'écartent desdites crémaillères de verrouillage pour libérer le coulissement dudit corps secondaire,
- un pignon est monté en rotation sur ledit corps principal selon un axe longitudinal, ledit pignon engrenant avec ladite crémaillère d'actionnement, ledit pignon étant pourvu d'un premier et d'un deuxième excentrique,
- l'actionnement en déverrouillage de ladite traverse réalise une mise en appui desdits excentriques contre deux surfaces de came respectives prévues sur chacun desdits loquet de manière à rapprocher lesdits loquets l'un de l'autre pour les mettre en position de déverrouillage.

Dans cette description, les termes de positionnement dans l'espace (longitudinal, transversal, vertical, horizontal, latéral, supérieur, inférieur, avant, arrière,...) sont pris en référence à l'appui-tête disposé dans le véhicule en situation d'utilisation.

Avec l'agencement proposé, on assure un verrouillage très robuste du corps secondaire dans sa position de réglage face à un choc imprimé vers l'arrière sur l'appui-tête, ceci par la mise en oeuvre de deux loquets actionnés en verrouillage par le deuxième moyen ressort.

D'autres particularités et avantages de l'invention apparaîtront dans la description qui suit, faite en référence aux figures jointes, dans lesquelles :

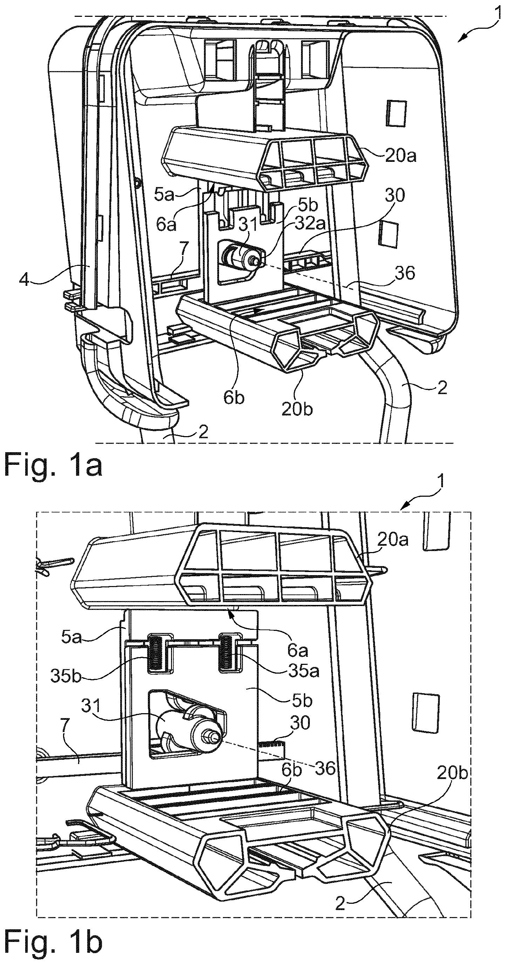

[Fig.1a] et
[Fig.1b] sont des vues schématiques en perspective écorchée partielle d'un appui-tête selon une réalisation, les loquets étant en position de verrouillage (figure 1a) et de déverrouillage (figure 1b),

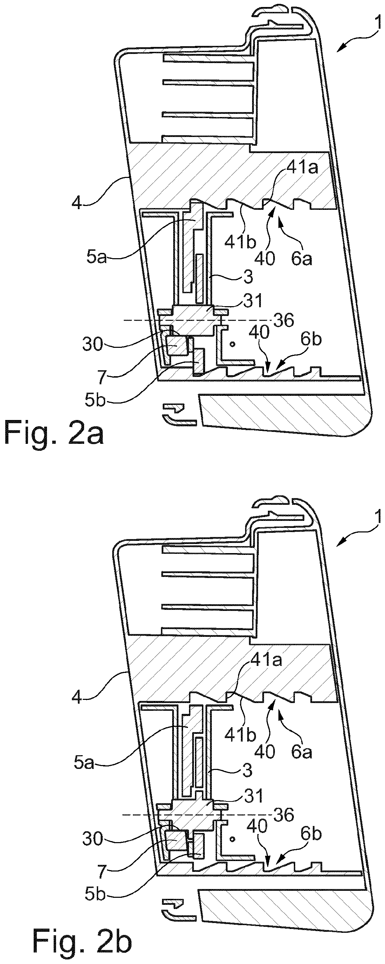

[Fig.2a] et
[Fig.2b] sont des vues schématiques en coupe verticale partielle de l'appui-tête de la figure 1, les loquets étant en position de verrouillage (figure 2a) et de déverrouillage (figure 2b),
[Fig.3a],
[Fig.3b],

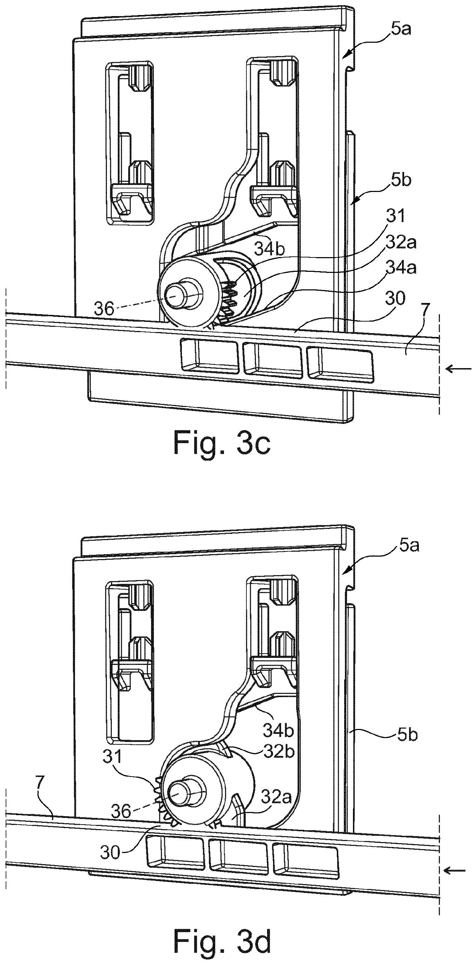

[Fig.3c] et

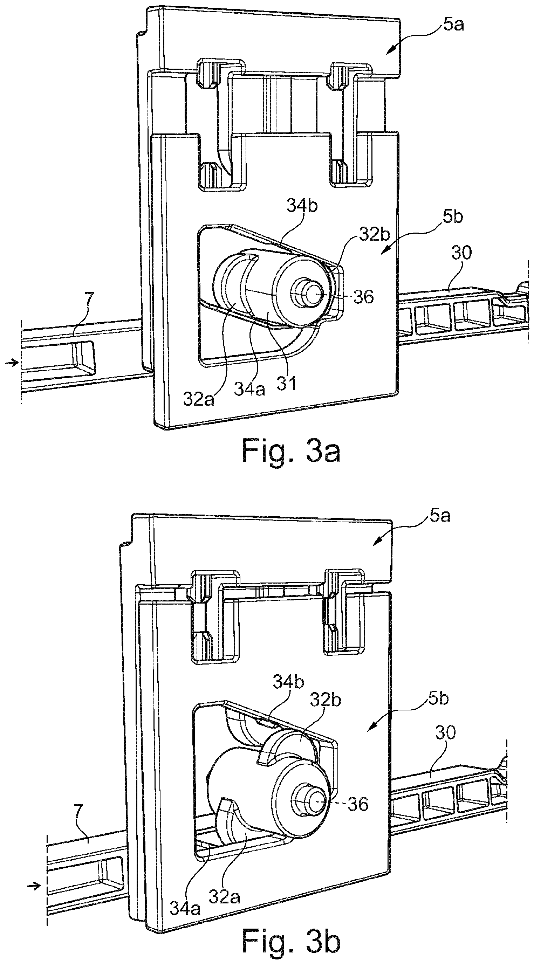

[Fig.3d] sont des vues schématiques de détail en perspective de l'appui-tête des figures précédentes, les figures 3a et 3b correspondant à une vue selon une face, les loquets étant en position de verrouillage (figure 3a) et de déverrouillage (figure 3b), et les figures 3c et 3d correspondant à une vue selon l'autre face, les loquets étant en position de verrouillage (figure 3c) et de déverrouillage (figure 3d),

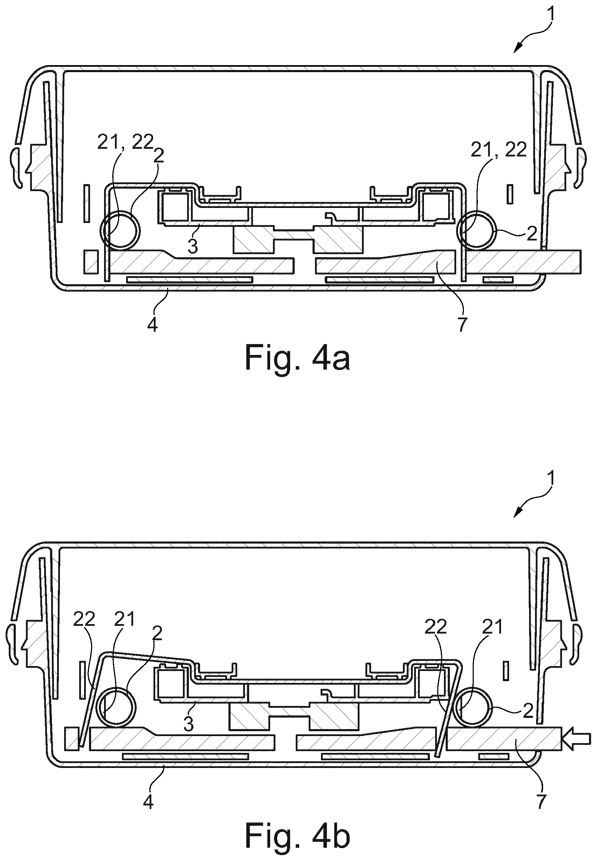

[Fig.4a] et
[Fig.4b] sont des vues schématiques partielles en coupe horizontale de l'appui-tête des figures précédentes, le premier dispositif de verrouillage étant activé (figure 4a) et désactivé (figure 4b).

En référence aux figures, on décrit un appui-tête 1 de siège de véhicule automobile, ledit appui-tête comprenant :
- une armature de montage sur un dossier dudit siège, ladite armature comprenant deux tiges 2 parallèles s'étendant verticalement,
- un corps principal 3 en matériau plastique moulé - notamment en polyéthylène de haute densité (PEHD) - monté en coulissement sur lesdites tiges de manière à pouvoir adopter une pluralité de positions de réglage vertical,
- un premier dispositif de verrouillage dudit corps principal dans la position de réglage choisie,
- un corps secondaire 4 en matériau plastique moulé - notamment en polyéthylène de haute densité (PEHD) - monté en coulissement longitudinal sur ledit corps principal, de sorte que ledit corps secondaire puisse adopter une pluralité de positions de réglage longitudinal,
- un deuxième dispositif de verrouillage dudit corps secondaire dans la position de réglage choisie quand un choc est appliqué vers l'arrière sur ledit corps,
- une traverse 7 commune de déverrouillage desdits dispositifs, ladite traverse étant montée en coulissement transversal sur ledit corps principal, ladite traverse présentant une extrémité pourvue d'un bouton non représenté - actionnable par exemple en translation ou en rotation - permettant son actionnement en déverrouillage, de manière à libérer le coulissement desdits corps principal et secondaire,
- un premier moyen ressort non représenté de renvoi de ladite traverse en position de verrouillage,
ledit appui-tête présentant en outre les caractéristiques suivantes :
- ladite traverse est pourvue d'une crémaillère d'actionnement 30,
- ledit deuxième dispositif de verrouillage comprend un premier loquet supérieur 5a et un deuxième loquet inférieur 5b montés chacun en coulissement vertical sur ledit corps principal, lesdits loquets étant actionnés en écartement l'un de l'autre par un deuxième moyen ressort interposé entre eux pour les disposer en position de verrouillage où lesdits loquets coopèrent respectivement avec une première 6a et une deuxième 6b crémaillère de verrouillage, lesdites crémaillères s'étendant longitudinalement sur ledit corps secondaire, lesdits loquets étant actionnables vers une position rapprochée de déverrouillage où ils s'écartent desdites crémaillères pour libérer le coulissement dudit corps secondaire,
- un pignon 31 est monté en rotation sur ledit corps principal selon un axe longitudinal 36, ledit pignon engrenant avec ladite crémaillère d'actionnement, ledit pignon étant pourvu d'un premier 32a et d'un deuxième 32b excentrique,
- l'actionnement en déverrouillage de ladite traverse réalise une mise en appui desdits excentriques contre deux surfaces de came respectives 34a,34b prévues sur chacun desdits loquet de manière à rapprocher lesdits loquets l'un de l'autre pour les mettre en position de déverrouillage.

Selon la réalisation représentée, les loquets 5a,5b sont disposés verticalement à l'aplomb l'un de l'autre.

En particulier, les loquets 5a,5b coulissent l'un contre l'autre en s'emboitant verticalement l'un dans l'autre tout sans entraver ledit coulissement.

Selon la réalisation représentée, les crémaillères 6a,6b sont disposées face à face.

Selon la réalisation représentée, les excentriques 32a,32b sont décalés l'un de l'autre selon l'axe de rotation 36 du pignon 31.

En variante non représentée, les excentriques 32,33 sont disposés sur la même cote selon l'axe de rotation 36.

Selon la réalisation représentée, le deuxième moyen ressort est formé par deux ressorts 35a,35b disposés latéralement de part et d'autre des loquets 5a,5b, ce qui permet de supprimer tout risque de mise en porte à faux desdits loquets et leur blocage en coulissement quand ils sont actionnés en déverrouillage.

Selon la réalisation représentée, les surfaces de came 34a,34b sont sous forme de pans inclinés par rapport à l'horizontale de manière à limiter les frottements et faciliter l'actionnement en déverrouillage des loquets 5a,5b.

Selon la réalisation représentée, les crémaillères de verrouillage 6a,6b sont disposées respectivement sur deux organes de guidage 20a,20b en coulissement du corps secondaire 4 sur le corps principal 3, lesdits organes étant ici sous forme de tenons intégrés audit corps secondaire, lesdits tenons coulissant dans deux mortaises respectives prévue dans ledit corps principal.

Selon la réalisation représentée, les crémaillères de verrouillage 6a,6b sont pourvues de crans 40 présentant :
- une face arrière 41a s'étendant transversalement et parallèlement à la direction de coulissement des loquets 5a,5b, de manière à bloquer le corps secondaire 4 dans sa position de réglage en cas de choc vers l'arrière appliqué audit appui-tête par la tête d'un passager,
- une face avant 41b s'étendant transversalement et de manière inclinée par rapport à la direction de coulissement desdits loquets, de manière à présenter une dépouille permettant audit passager d'actionner par traction vers l'avant, et sans actionnement de la traverse 7 en déverrouillage, ledit corps secondaire pour avancer sa position de réglage.

Avec un tel agencement, le réglage de la position du corps secondaire 4 vers l'arrière implique un actionnement de la traverse 7 en déverrouillage.

En revanche le réglage du corps secondaire 4 vers l'avant est réalisé par simple traction et sans actionnement de la traverse 7, ce qui présente une ergonomie optimisée.

En effet, la dépouille imprimée à la face avant 41b permet à ladite face de former une surface de came sur laquelle peut coulisser le loquet 5a,5b en se déplaçant vers sa position de déverrouillage.

En variante non représentée, la face avant 41b s'étend transversalement et parallèlement à la direction de coulissement des loquets 5a,5b ; dans ce cas, le réglage de la position du corps secondaire 4 vers l'avant implique un actionnement de la traverse 7 en déverrouillage.

Selon la réalisation représentée, le premier dispositif de verrouillage comprend :
- une pluralité de crans 21 de verrouillage s'étageant verticalement sur au moins une des tiges 2 de manière à définir une tige crantée,
- au moins une saillie 22 de verrouillage montée mobile par rapport au corps principal 3 entre une position de verrouillage, où ladite saillie s'insère dans un desdits crans, et une position de déverrouillage, où ladite saillie se retire dudit cran afin de libérer le coulissement dudit corps.

Selon la réalisation représentée, les deux tiges 2 sont crantées, les saillies 22 de verrouillage étant issues d'un fil en métal à ressort dont les parties extrêmes sont repliées de manière à former lesdites saillies, l'actionnement de ladite traverse en déverrouillage opérant un appui sur lesdites parties pour déformer ledit fil et dégager lesdites saillies des crans 21 de verrouillage.

Dans une telle réalisation, le premier moyen ressort peut être formé uniquement par le fil en métal à ressort, ledit fil retournant à l'état non déformé quand la traverse 7 n'est pas actionnée en déverrouillage.

## Revendications

1. Appui-tête (1) de siège de véhicule automobile, ledit appui-tête comprenant :
• une armature de montage sur un dossier dudit siège, ladite armature comprenant deux tiges (2) parallèles s'étendant verticalement,
• un corps principal (3) en matériau plastique moulé monté en coulissement sur lesdites tiges de manière à pouvoir adopter une pluralité de positions de réglage vertical,
• un premier dispositif de verrouillage dudit corps principal dans la position de réglage choisie,
• un corps secondaire (4) en matériau plastique moulé monté en coulissement longitudinal sur ledit corps principal, de sorte que ledit corps secondaire puisse adopter une pluralité de positions de réglage longitudinal,
• un deuxième dispositif de verrouillage dudit corps secondaire dans la position de réglage choisie quand un choc est appliqué vers l'arrière sur ledit corps,
• une traverse (7) commune de déverrouillage desdits dispositifs, ladite traverse étant montée en coulissement transversal sur ledit corps principal, ladite traverse présentant une extrémité pourvue d'un bouton permettant son actionnement en déverrouillage, de manière à libérer le coulissement desdits corps principal et secondaire, ladite traverse étant pourvue d'une crémaillère d'actionnement (30),
• un premier moyen ressort de renvoi de ladite traverse en position de verrouillage,
- un pignon (31) monté en rotation sur ledit corps principal selon un axe longitudinal (36), ledit pignon engrenant avec ladite crémaillère d'actionnement, ledit pignon étant pourvu d'un premier (32a) et d'un deuxième (32b) excentrique, ledit appui-tête étant **caractérisé en ce que** :
• ledit deuxième dispositif de verrouillage comprend un premier loquet supérieur (5a) et un deuxième loquet inférieur (5b) montés chacun en coulissement vertical sur ledit corps principal, lesdits loquets étant actionnés en écartement l'un de l'autre par un deuxième moyen ressort interposé entre eux pour les disposer en position de verrouillage où lesdits loquets coopèrent respectivement avec une première (6a) et une deuxième (6b) crémaillère de verrouillage s'étendant longitudinalement sur ledit corps secondaire, lesdits loquets étant actionnables vers une position rapprochée de déverrouillage où ils s'écartent desdites crémaillères de verrouillage pour libérer le coulissement dudit corps secondaire,
• l'actionnement en déverrouillage de ladite traverse réalise une mise en appui desdits excentriques contre deux surfaces de came respectives (34a,34b) prévues sur chacun desdits loquet de manière à rapprocher lesdits loquets l'un de l'autre pour les mettre en position de déverrouillage.

2. Appui-tête selon la revendication 1, **caractérisé en ce que** les excentriques (32a,32b) sont décalés l'un de l'autre selon l'axe de rotation (36) du pignon (31).

3. Appui-tête selon l'une des revendications précédentes, **caractérisé en ce que** le deuxième moyen ressort est formé par deux ressorts (35a,35b) disposés latéralement de part et d'autre des loquets (5a,5b).

4. Appui-tête selon l'une quelconque des revendications précédentes, **caractérisé en ce que** les surfaces de came (34a,34b) sont sous forme de pans inclinés par rapport à l'horizontale de manière à limiter les frottements et faciliter l'actionnement en déverrouillage des loquets (5a,5b).

5. Appui-tête selon l'une quelconque des revendications précédentes, **caractérisé en ce que** les crémaillères de verrouillage (6a,6b) sont disposées respectivement sur deux organes de guidage (20a,20b) en coulissement du corps secondaire (4) sur le corps principal (3).

6. Appui-tête selon l'une quelconque des revendications 1 à 5, **caractérisé en ce que** les crémaillères de verrouillage (6a,6b) sont pourvues de crans (40) présentant :
• une face arrière (41a) s'étendant transversalement et parallèlement à la direction de coulissement des loquets (5a,5b), de manière à bloquer le corps secondaire (4) dans sa position de réglage en cas de choc vers l'arrière appliqué audit appui-tête par la tête d'un passager,
• une face avant (41b) s'étendant transversalement et de manière inclinée par rapport à la direction de coulissement desdits loquets, de manière à présenter une dépouille permettant audit passager d'actionner par traction vers l'avant, et sans actionnement de la traverse (7) en déverrouillage, ledit corps secondaire pour avancer sa position de réglage.

7. Appui-tête selon l'une quelconque des revendications précédentes, **caractérisé en ce que** le premier dispositif de verrouillage comprend :
• une pluralité de crans (21) de verrouillage s'étageant verticalement sur au moins une des tiges (2) de manière à définir une tige crantée,
• au moins une saillie (22) de verrouillage montée mobile par rapport au corps principal (3) entre une position de verrouillage, où ladite saillie s'insère dans un desdits crans, et une position de déverrouillage, où ladite saillie se retire dudit cran afin de libérer le coulissement dudit corps.

## Patentansprüche

1. Kopfstütze (1) für einen Kraftfahrzeugsitz, wobei die Kopfstütze Folgendes umfasst:
• einen Montagerahmen an einer Rückenlehne des Sitzes, wobei der Rahmen zwei parallele, sich vertikal erstreckende Stangen (2) umfasst,
• einen Hauptkörper (3) aus geformtem Kunststoffmaterial, der verschiebbar auf den Stangen montiert ist, um eine Vielzahl von vertikalen Einstellpositionen einnehmen zu können,
• eine erste Vorrichtung zum Verriegeln des Hauptkörpers in der gewählten Einstellposition,
• einen Sekundärkörper (4) aus geformtem Kunststoffmaterial, der in Längsrichtung verschiebbar auf dem Hauptkörper montiert ist, so dass der Sekundärkörper eine Vielzahl von Längseinstellpositionen einnehmen kann,
• eine zweite Vorrichtung zum Verriegeln des Sekundärkörpers in der gewählten Einstellposition, wenn ein nach hinten gerichteter Stoß auf den Körper ausgeübt wird,
• eine gemeinsame Querstrebe (7) zum Entriegeln der Vorrichtungen, wobei die Querstrebe in Querrichtung verschiebbar auf dem Hauptkörper montiert ist, wobei die Querstrebe an einem Ende mit einem Knopf versehen ist, der bei seiner Betätigung zum Entriegeln ermöglicht, dass das Gleiten des Hauptkörpers und des Sekundärkörpers freigegeben wird, wobei die Querstrebe mit einer Betätigungszahnstange (30) versehen ist,
• ein erstes Federmittel zum Zurückstellen der Querstrebe in die Verriegelungsposition,
- ein Ritzel (31), das drehbar auf dem Hauptkörper entlang einer Längsachse (36) montiert ist, wobei das Ritzel mit der Betätigungszahnstange kämmt, wobei das Ritzel mit einem ersten (32a) und einem zweiten (32b) Exzenter versehen ist,
wobei die Kopfstütze **dadurch gekennzeichnet ist, dass**:
• die zweite Verriegelungsvorrichtung einen ersten oberen Riegel (5a) und einen zweiten unteren Riegel (5b) umfasst, die jeweils vertikal verschiebbar am Hauptkörper montiert sind, wobei die Riegel in einem Abstand voneinander durch ein zweites Federmittel betätigt werden, das zwischen ihnen eingefügt ist, um sie in der Verriegelungsposition anzuordnen, in der die Riegel jeweils mit einer ersten (6a) und einer zweiten (6b) Verriegelungszahnstange zusammenwirken, die sich in Längsrichtung am Sekundärkörper erstreckt, wobei die Riegel in Richtung einer engen Entriegelungsposition betätigbar sind, in der sie von den Verriegelungszahnstangen abrücken, um das Gleiten des Sekundärkörpers freizugeben,
• die Entriegelungsbetätigung der Querstrebe bewirkt, dass die Exzenter auf zwei jeweiligen Nockenflächen (34a, 34b) anliegen, die an jedem der Riegel vorgesehen sind, um die Riegel einander anzunähern, um sie in die Entriegelungsposition zu bringen.

2. Kopfstütze nach Anspruch 1, **dadurch gekennzeichnet, dass** die Exzenter (32a, 32b) entlang der Drehachse (36) des Ritzels (31) zueinander versetzt sind.

3. Kopfstütze nach einem der vorhergehenden Ansprüche, **dadurch gekennzeichnet, dass** das zweite Federmittel durch zwei Federn (35a, 35b) ausgebildet ist, die seitlich auf beiden Seiten der Riegel (5a, 5b) angeordnet sind.

4. Kopfstütze nach einem der vorhergehenden Ansprüche, **dadurch gekennzeichnet, dass** die Nockenflächen (34a, 34b) in Form von zur Horizontalen geneigten Abschnitten vorliegen, um die Reibung zu begrenzen und die Betätigung beim Entriegeln der Riegel (5a, 5b) zu erleichtern.

5. Kopfstütze nach einem der vorhergehenden Ansprüche, **dadurch gekennzeichnet, dass** die Verriegelungszahnstangen (6a, 6b) jeweils an zwei Führungselementen (20a, 20b) zum Gleiten des Sekundärkörpers (4) auf dem Hauptkörper (3) angeordnet sind.

6. Kopfstütze nach einem der Ansprüche 1 bis 5, **dadurch gekennzeichnet, dass** die Verriegelungszahnstangen (6a, 6b) mit Einkerbungen (40) versehen sind, die Folgendes aufweisen:
• eine Rückseite (41a), die sich quer und parallel zur Gleitrichtung der Riegel (5a, 5b) erstreckt, um den Sekundärkörper (4) in seiner Einstellposition bei einem nach hinten gerichteten Stoß zu blockieren, der durch den Kopf eines Passagiers auf die Kopfstütze ausgeübt wird,
• eine Vorderseite (41b), die sich quer und geneigt zur Gleitrichtung der Riegel erstreckt, so dass eine Aussparung vorhanden ist, die es dem Passagier ermöglicht, den Sekundärkörper durch ein Ziehen nach vorne und ohne Betätigung der Querstrebe (7) in der Entriegelung zu betätigen, um seine Einstellposition vorzuschieben.

7. Kopfstütze nach einem der vorhergehenden Ansprüche, **dadurch gekennzeichnet, dass** die erste Verriegelungsvorrichtung Folgendes umfasst:
• eine Vielzahl von Verriegelungseinkerbungen (21), die vertikal an mindestens einer der Stangen (2) vorhanden sind, um eine eingekerbte Stange zu definieren,
• mindestens einen Verriegelungsvorsprung (22), der im Verhältnis zum Hauptkörper (3) zwischen einer Verriegelungsposition, in der der Vorsprung in eine der Einkerbungen eingreift, und einer Entriegelungsposition, in der sich der Vorsprung aus der Einkerbung zurückzieht, um das Gleiten des Körpers zu lösen, beweglich montiert ist.

## Claims

1. A headrest (1) for a motor vehicle seat, said headrest comprising :
- a frame for mounting on a backrest of said seat, said frame comprising two parallel vertically extending rods (2),
- a molded plastic main body (3) slidably mounted on said rods so as to be able to adopt a plurality of vertical adjustment positions,
- a first device for locking said main body in the selected adjustment position,
- a secondary body (4) made of molded plastic material slidably mounted longitudinally on said main body, so that said secondary body can adopt a plurality of longitudinal adjustment positions,
- a second device for locking said secondary body in the selected adjustment position when an impact is applied rearwardly to said body,
- a common crosspiece (7) for unlocking said devices, said crosspiece being transversely slidably mounted on said main body, said crosspiece having an end provided with a button for unlocking actuation, so as to free sliding of said main and secondary bodies, said crosspiece being provided with an actuating rack (30),
- a first spring means for returning said crosspiece to the locked position,
- a pinion (31) is rotatably mounted on said main body along a longitudinal axis (36), said pinion meshing with said actuating rack, said pinion being provided with a first (32a) and a second (32b) eccentric,
said headrest being **characterized in that**:
- said second locking device comprises a first upper latch (5a) and a second lower latch (5b) each vertically slidably mounted on said main body, said latches being actuated away from each other by a second spring means interposed between them to dispose them in a locking position where said latches cooperate respectively with a first (6a) and a second (6b) locking rack extending longitudinally on said secondary body, said latches being operable towards a close unlocking position where they move away from said locking racks to release sliding of said secondary body,
- the unlocking actuation of said crosspiece causes said eccentrics to bear against two respective cam surfaces (34a, 34b) provided on each of said latches, so as to bring said latches closer to one another to bring them into the unlocked position.

2. Headrest according to claim 1, **characterized in that** the eccentrics (32a, 32b) are offset from one another along the axis of rotation (36) of the pinion (31).

3. Headrest according to one of the preceding claims, **characterized in that** the second spring means is formed by two springs (35a, 35b) arranged laterally on either side of the latches (5a, 5b).

4. A headrest according to any one of the preceding claims, **characterized in that** the cam surfaces (34a, 34b) are in the form of slopes inclined relative to the horizontal so as to limit friction and facilitate the unlocking actuation of the latches (5a, 5b).

5. Headrest according to any one of the preceding claims, **characterized in that** the locking racks (6a, 6b) are arranged respectively on two sliding guide members (20a, 20b) of the secondary body (4) on the main body (3).

6. Headrest according to any one of claims 1 to 5, **characterized in that** the locking racks (6a, 6b) are provided with notches (40) having :
- a rear face (41a) extending transversely and parallel to the sliding direction of the latches (5a, 5b), so as to lock the secondary body (4) in its adjustment position in the event of a rearward impact applied to said headrest by a passenger's head,
- a front face (41b) extending transversely and inclinedly with respect to the sliding direction of said latches, so as to present an undercut enabling said passenger to actuate said secondary body by pulling forwards, and without actuating the crosspiece (7) in unlocking mode, to advance its adjustment position.

7. Headrest according to any of the preceding claims, **characterized in that** the first locking device comprises :
- a plurality of locking notches (21) vertically stepped on at least one of the rods (2) so as to define a notched rod,
- at least one locking projection (22) mounted so as to be movable relative to the main body (3) between a locking position, in which said projection engages in one of said notches, and an unlocking position, in which said projection withdraws from said notch to release sliding of said body.
